# EUROPEAN PATENT APPLICATION

(11) **EP 3 882 860 A2**
(43) Date of publication of application: **22.09.2021**
(21) Application number: 21162971.2
(22) Date of filing: 16.03.2021
(51) Int. Cl.: G06T 13/20, G06T 13/40

(54) **METHOD, APPARATUS, DEVICE, STORAGE MEDIUM AND PROGRAM FOR ANIMATION INTERACTION**

(30) Priority: 14.07.2020 CN 202010676929
(71) Applicant: BEIJING BAIDU NETCOM SCIENCE AND TECHNOLOGY CO. LTD., 100085 Beijing (CN)
(72) Inventor: CHEN, Ruizhi, Haidian District, Beijing 100085 (CN); PENG, Haotian, Haidian District, Beijing 100085 (CN)
(74) Representative: Mewburn Ellis LLP

(57) **Abstract**

The present disclosure discloses a method, an apparatus, a device and a storage medium for an animation interaction, and relates to the technical fields of image processing, three-dimensional modeling, and augmented reality. A specific embodiment of the method includes: receiving a person image sent by a terminal device; then generating a three-dimensional virtual image based on the person image, wherein the three-dimensional virtual image is similar to a person in the person image; generating animation interactive information, wherein the animation interactive information includes a sequence of interactive expression frames; and sending the three-dimensional virtual image and the animation interactive information to the terminal device. The embodiment replaces the person in the person image with a similar three-dimensional virtual image, and uses the animation interactive information to drive the three-dimensional virtual image to accompany users, thereby making the presentation forms of the virtual companion more diverse and improving the presentation effect quality and the overall interaction quality of the virtual companion.

## Description

### TECHNICAL FIELD

The present disclosure relates to the field of computer technology, specifically to the technical fields of image processing, three-dimensional modeling, and augmented reality, and more specifically to a method, an apparatus, a device and a storage medium for an animation interaction.

### BACKGROUND

Artificial Intelligence (AI) is a new technical science for researching, developing theories, methods, technologies and application systems for simulating, extending and expanding human intelligence. Artificial intelligence is a branch of computer science that attempts to understand the essence of intelligence and to produce a new intelligence machine that can react in a manner similar to human intelligence. Research in this field includes robotics, language recognition, image recognition, natural language processing and expert systems. Since the birth of artificial intelligence, the theory and technology have become increasingly mature, and the field of application has also continued to expand.

As an important application technology of artificial intelligence, virtual companion has been deeply applied in more and more Internet of Things scenarios. However, the existing virtual companion is mainly in the form of speech, and the presentation form is monotonous.

### SUMMARY

Embodiments of the present disclosure provide a method, an apparatus, a device and a storage medium for an animation interaction.

In a first aspect, an embodiment of the present disclosure provides a method for an animation interaction. The method includes: receiving a person image sent by a terminal device; generating a three-dimensional virtual image based on the person image, where the three-dimensional virtual image is similar to a person in the person image; generating animation interactive information, where the animation interactive information includes a sequence of interactive expression frames; and sending the three-dimensional virtual image and the animation interactive information to the terminal device.

In a second aspect, an embodiment of the present disclosure provides a method for an animation interaction. The method includes: sending a person image to a server, and receiving a three-dimensional virtual image and animation interactive information returned by the server, where the three-dimensional virtual image is similar to a person in the person image, and the animation interactive information includes a sequence of interactive expression frames; rendering the three-dimensional virtual image based on the sequence of interactive expression frames to generate an interactive animation of the three-dimensional virtual image; and fusing the interactive animation into the person image for display.

In a third aspect, an embodiment of the present disclosure provides an apparatus for an animation interaction. The apparatus includes: a receiving module, configured to receive a person image sent by a terminal device; a first generation module, configured to generate a three-dimensional virtual image based on the person image, where the three-dimensional virtual image is similar to a person in the person image; a second generation module, configured to generate animation interactive information, where the animation interactive information includes a sequence of interactive expression frames; and a sending module, configured to send the three-dimensional virtual image and the animation interactive information to the terminal device.

In a fourth aspect, an embodiment of the present disclosure provides an apparatus for an animation interaction. The apparatus includes: a sending and receiving module, configured to send a person image to a server, and receive a three-dimensional virtual image and animation interactive information returned by the server, where the three-dimensional virtual image is similar to a person in the person image, and the animation interactive information includes a sequence of interactive expression frames; a rendering and generating module, configured to render the three-dimensional virtual image based on the sequence of interactive expression frames to generate an interactive animation of the three-dimensional virtual image; and a display module, configured to fuse the interactive animation into the person image for display.

In a fifth aspect, an embodiment of the present disclosure provides an electronic device. The electronic device includes: at least one processor; and a memory communicating with the at least one processor; where the memory stores instructions that can be executed by the at least one processor, and the instructions are executed by the at least one processor to cause the at least one processor to execute the method as described in any of the implementations of the first aspect or the method as described in any of the implementations of the second aspect.

In a sixth aspect, an embodiment of the present disclosure provides a non-transitory computer readable storage medium storing computer instructions. The computer instructions are used to cause a computer to execute the method as described in any of the implementations of the first aspect or the method as described in any of the implementations of the second aspect.

In a seventh aspect, an embodiment of the present disclosure provides a computer program, and the computer program, when executed by a computer, causes the computer to perform the method as described in any of the implementations of the first aspect or the method as described in any of the implementations of the second aspect.

According to the method, the apparatus, the device and the storage medium for the animation interaction provided in the embodiments of the present disclosure, at first, the person image sent by the terminal device is received; then the three-dimensional virtual image similar to the person in the person image is generated based on the person image, and the animation interactive information is generated; and finally the three-dimensional virtual image and the animation interactive information are sent to the terminal device. The person in the person image is replaced with a similar three-dimensional virtual image, and the animation interactive information is used to drive the three-dimensional virtual image to accompany users, thereby making the presentation forms of the virtual companion more diverse and improving the presentation effect quality and the overall interaction quality of the virtual companion. Further, the participation and the sense of identity of the user are greatly improved, thereby increasing the competitiveness and influence of the product to which the method for the animation interaction is applied.

It should be understood that the content described in this part is not intended to identify the key or critical features of the embodiments of the present disclosure, nor is it intended to limit the scope of the present disclosure. The other features of the present disclosure will become easy to understand through the following description.

### BRIEF DESCRIPTION OF THE DRAWINGS

After reading detailed descriptions of non-limiting embodiments with reference to the following accompanying drawings, other features, objectives and advantages of the present disclosure will be more apparent. The accompanying drawings are intended to provide a better understanding of the present disclosure and do not constitute a limitation to the present disclosure:
Fig. 1 is an example system architecture diagram in which the present disclosure may be applied;
Fig. 2 is a flowchart of an embodiment of a method for an animation interaction according to the present disclosure;
Fig. 3 is a flowchart of yet another embodiment of a method for an animation interaction according to the present disclosure;
Fig. 4 is a flowchart of another embodiment of a method for an animation interaction according to the present disclosure;
Fig. 5 is a diagram of a scenario of a method for an animation interaction in which an embodiment of the present disclosure may be implemented;
Fig. 6 is a schematic structural diagram of an embodiment of an apparatus for an animation interaction according to the present disclosure;
Fig. 7 is a schematic structural diagram of yet another embodiment of an apparatus for an animation interaction according to the present disclosure; and
Fig. 8 is a block diagram of an electronic device adapted to implement a method for an animation interaction of an embodiment of the present disclosure.

### DETAILED DESCRIPTION OF EMBODIMENTS

The example embodiments of the present disclosure will be described below with reference to the accompanying drawings, in which various details of the embodiments of the present disclosure are included to facilitate understanding, and should be considered as examples only. Accordingly, those of ordinary skill in the art should recognize that various changes and modifications may be made to the embodiments described herein without departing from the scope and spirit of the present disclosure. Likewise, for clarity and conciseness, descriptions of well-known functions and structures are omitted in the following description.

It should also be noted that the embodiments in the present disclosure and the features in the embodiments may be combined with each other on a non-conflict basis. The present disclosure will be described below in detail with reference to the accompanying drawings and in combination with the embodiments.

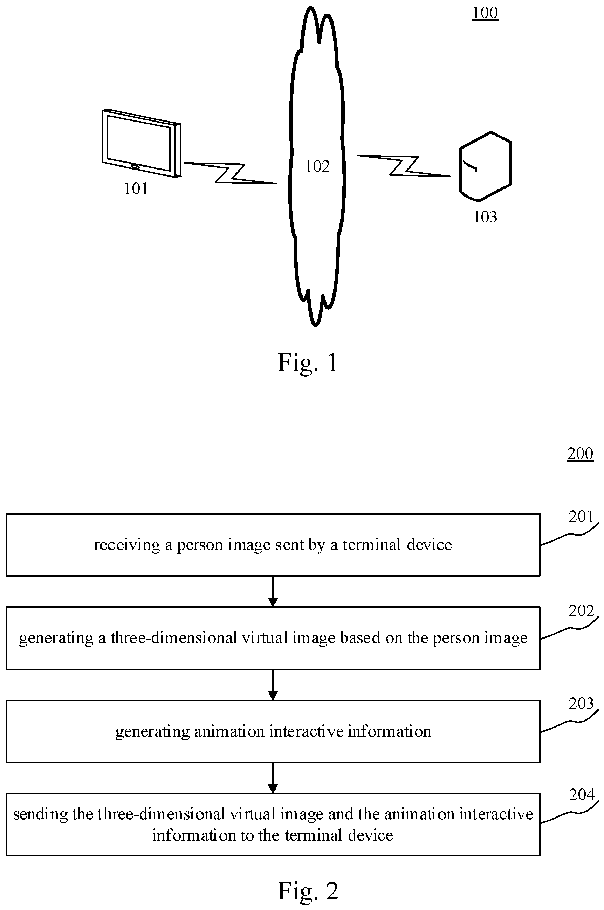

Fig. 1 shows an example system architecture 100 of an embodiment in which a method or an apparatus for an animation interaction according to the present disclosure may be applied.

As shown in Fig. 1, the system architecture 100 may include a terminal device 101, a network 102, and a server 103. The network 102 serves as a medium for providing a communication link between the terminal device 101 and the server 103. The network 102 may include various types of connections, such as wired or wireless communication links, or optical fiber cables.

A user may use the terminal device 101 to interact with the server 103 via the network 102 to receive or send messages or the like. Various client applications (e.g., 3D face pinching software, intelligent photo frame software, etc.) may be applied on the terminal device 101. The terminal device 101 may execute a process, such as rendering or the like, on data, such as a three-dimensional virtual image and animation interactive information received from the server 101 or the like, and present a result of the process (such as an fusion display of an interactive animation and a synchronous playback of an interactive speech).

The terminal device 101 may be hardware or software. When the terminal device 101 is hardware, it may be various electronic devices, including but not limited to, an electronic photo frame, a smart phone, a tablet computer and the like. When the terminal device 101 is software, it may be installed in the electronic device. The software may be implemented as a plurality of software pieces or software modules, or as a single software piece or software module, which is not specifically limited herein.

The server 103 may be a server proving various services, such as a background server of 3D face pinching software or intelligent photo frame software. The background server may execute a process, such as analysis or the like, on data, such as a person image received from the terminal device 101 or the like, and feed a result of the process (such as the three-dimensional virtual image and the animation interactive information) back to the terminal device 101.

It should be noted that the server 103 may be hardware of software. When the server 103 is hardware, it may be implemented as a distributed server cluster composed of a plurality of servers, or as a single server. When the server 103 is software, it may be implemented as a plurality of software pieces or software modules (e.g., for providing distributed services), or as a single software piece or software module, which is not specifically limited herein.

It should be noted that the method for the animation interaction provided in the embodiment of the present disclosure may be executed by the server 103, and correspondingly, the apparatus for the animation interaction is provided in the server 103; the method for the animation interaction provided in the embodiment of the present disclosure may alternatively be executed by the terminal device 101, and correspondingly, the apparatus for the animation interaction is provided on the terminal device 101.

It should be understood that the number of the terminal device, the network and the server in Fig. 1 is merely illustrative. Any number of terminal devices, networks and servers may be provided based on actual requirements.

Further referring to Fig. 2, a flow 200 of an embodiment of a method for an animation interaction according to the present disclosure is shown. The method for the animation interaction includes the following steps: 201 to 204.

Step 201 includes receiving a person image sent by a terminal device.

In this embodiment, an execution body of the method for the animation interaction (such as the server 103 shown in Fig. 1) may receive the person image sent by the terminal device (such as the terminal device 101 shown in Fig. 1).

In practice, the terminal device may include, but is not limited to, an electronic photo frame, a smart phone, a tablet computer and the like. 3D face pinching software or intelligent photo frame software may be installed on the terminal device. A user may upload the person image to the server through the 3D face pinching software or the intelligent photo frame software, where the person image is generally a two-dimensional image of a person in the real world. In some embodiments, the 3D face pinching software or the intelligent photo frame software may pre-acquire the camera right of the terminal device to capture a person image through the camera of the terminal device. In some embodiments, the 3D face pinching software or the intelligent photo frame software may pre-acquire the photo album reading right of the terminal device to read the person image stored in the photo album of the terminal device.

Step 202 includes generating a three-dimensional virtual image based on the person image.

In this embodiment, the execution body may generate the three-dimensional virtual image based on the person image, where the three-dimensional virtual image is similar to a person in the person image, and may be a three-dimensional animated person in which the person in the person image is stylized to highlight its personal characteristics.

In some embodiments, the execution body may pre-store a large number of three-dimensional virtual images. The execution body may extract features of a person in a person image and match the features with each of the pre-stored three-dimensional virtual images, and use the three-dimensional virtual image, whose features are highly matched, as the three-dimensional virtual image of the person in the person image.

In some embodiments, the execution body may use a PTA (photo to avatar) technology to execute 3D face pinching on a person in a person image to generate a corresponding three-dimensional virtual image. Specifically, the execution body may first classify facial organs of a person in a person image to obtain weights of the facial organs belonging to a plurality of types of pre-stored virtual facial organs; then weight the virtual facial organs corresponding to the plurality of types of pre-stored virtual facial organs based on the weights to generate the virtual facial organs of the person in the person image; finally generate a three-dimensional virtual image based on the virtual facial organs of the person in the person image. By fusing the plurality of types of pre-stored virtual facial organs, any type of virtual facial organ may be obtained by fusing. Further, a plurality of types of pre-stored virtual facial organs may be fused based on the similarity weights, so that virtual facial organs highly similar to the facial organs of the person in the person image may be obtained by fusing. The pre-stored virtual facial organs may include, but are not limited to, eyes, noses, mouths, eyebrows, ears and the like. For example, for eyes, a plurality of types of virtual eyes (including, but not limited to, peach blossom eyes, Ruifeng eyes, sleeping phoenix eyes, willow eyes, apricot eyes and the like) may be pre-stored, the similarity weights between the eyes of the person in the person image and the types of the virtual eyes are calculated, and the virtual eyes of the person in the person image may be obtained by fusing the types of the virtual eyes based on the similarity weights.

Step 203 includes generating animation interactive information.

In this embodiment, the execution body may generate animation interactive information. Generally, the execution body may pre-store a set of universal basic expressions including various expression frames. The execution body may combine at least some of the expression frames to generate a sequence of interactive expression frames. In this case, the animation interactive information may include the sequence of interactive expression frames. Optionally, the execution body may design a matching interactive speech for the sequence of expression frames. In this case, the animation interactive information may further include the interactive speech.

Step 204 includes sending the three-dimensional virtual image and the animation interactive information to the terminal device.

In this embodiment, the execution body may send the three-dimensional virtual image and the animation interactive information to the terminal device. In this way, the terminal device may render the three-dimensional virtual image based on the sequence of interactive expression frames, generate an interactive animation, fuse the interactive animation into the person image for display, and add the three-dimensional virtual image in the virtual world to the person image in the real world for interaction, thereby realizing the augmented reality of the person image. Optionally, in the case where the animation interactive information further includes the interactive speech, and while the interactive animation fused into the person image is displayed, the interactive speech may be synchronously played by the execution body, thereby realizing the virtual companion of a plurality of presentation forms. The three-dimensional virtual image in the interactive animation sequentially makes expressions in the sequence of interactive expression frames.

According to the method for the animation interaction provided in this embodiment of the present disclosure, at first, the person image sent by the terminal device is received; then the three-dimensional virtual image similar to the person in the person image is generated based on the person image, and the animation interactive information is generated; and finally the three-dimensional virtual image and the animation interactive information are sent to the terminal device. The person in the person image is replaced with a similar three-dimensional virtual image, and the animation interactive information is used to drive the three-dimensional virtual image to accompany users, thereby making the presentation forms of the virtual companion more diverse and improving the presentation effect quality and the overall interaction quality of the virtual companion. Further, the participation and sense of identity of the user are greatly improved, thereby increasing the competitiveness and influence of the product to which the method for the animation interaction is applied.

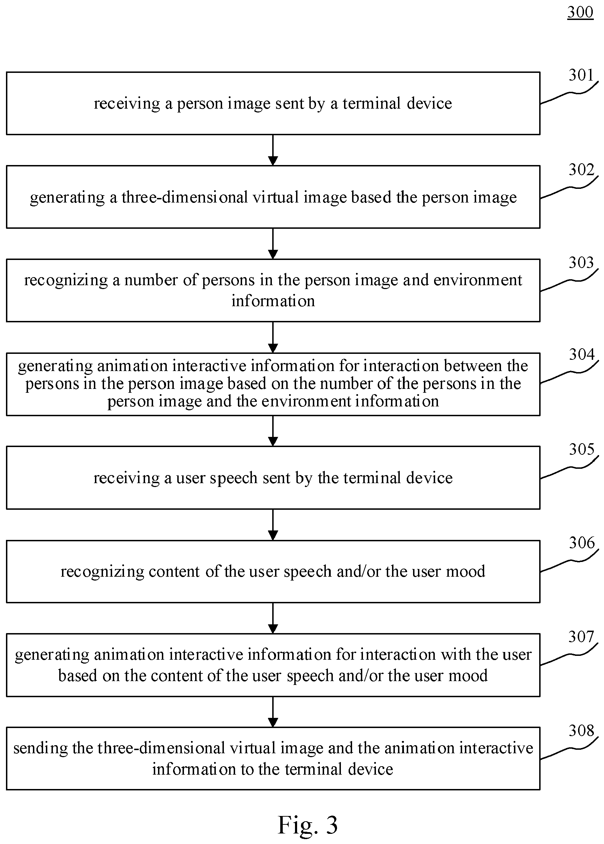

Further referring to Fig. 3, a flow 300 of yet another embodiment of a method for an animation interaction according to the present disclosure is shown. The method for the animation interaction includes the following steps 301 to 308.

Step 301 includes receiving a person image sent by a terminal device.

Step 302 includes generating a three-dimensional virtual image based on the person image.

In this embodiment, the specific operations of the steps 301-302 are described in detail in the steps 201-202 in the embodiment shown in Fig. 2, which are not repeated herein.

Step 303 includes recognizing the number of persons in the person image and the environment information.

In this embodiment, an execution body of the method for the animation interaction (such as the server 103 shown in Fig. 1) may generate default animation interactive information.

In some embodiments, the default animation interactive information generated by the execution body is stored for future use, regardless of whether a user inputs speech.

In some embodiments, the default animation interactive information is generated by the execution body, only if the user does not input speech.

Generally, the default animation interactive information matches the scene in the person image. Specifically, the execution body may recognize the number of the persons in the person image and the environment information to obtain the scene information in the person image. For example, the execution body may use a target detection model to detect human frames in the person image, and determine the number of the persons in the person image based on the number of the detected human frames. The execution body may use a target recognition model to recognize objects in the background of the person image, and determine the environment information in the person image based on the recognized objects. The target detection model and the target recognition model may be neural network models obtained by pre-training in a deep learning manner.

Step 304 includes generating the animation interactive information for interaction between the persons in the person image based on the number of the persons in the person image and the environment information.

In this embodiment, the execution body may generate the animation interactive information for interaction between the persons in the person image based on the number of the persons in the person image and the environment information. The number of interactive participants may be determined based on the number of the persons in the person image, and interactive content matched thereto may be generated based on the environment information in the person image. The number of the interactive participants is not greater than the number of the persons in the person image, and is generally equal to the number of the persons in the person image. For example, if three persons are in the person image and in a mall, the animation interactive information may be interactive information that the three persons discuss shopping in the mall.

Step 305 includes receiving a user speech send by the terminal device.

In this embodiment, in the case where the user inputs speech, the execution body may generate animation interactive information for interaction with the user. Specifically, the user speech sent by the terminal device (such as the terminal device 101 shown in Fig. 1) is received, and the animation interactive information matching the user speech is generated.

In practice, the terminal device may include, but is not limited to, an electronic photo frame, a smart phone, a tablet computer and the like. 3D face pinching software or intelligent photo frame software may be installed on the terminal device. The 3D face pinching software or the intelligent photo frame software may pre-acquire the recording right of the terminal device, and collect the user speech input by the user through the microphone of the terminal device.

Step 306 includes recognizing the content of the user speech and/or the user mood.

In this embodiment, the above-mention execution body may recognize the content of the user speech and/or the user mood. The content of the user speech may be obtained by converting the user speech into text. The user mood may be determined by extracting emotional characteristic information from the user speech and/or the content of the user speech.

For the scheme of recognizing only content of a user speech, the execution body may convert the user speech into text and obtain the content of the user speech.

For the scheme of recognizing only a user mood, the execution body may directly extract the pronunciation characteristics of the user from the user speech and analyze the corresponding emotional characteristic information. The pronunciation characteristics may include, but are not limited to, prosody, rhythm, speech velocity, intonation rhetoric, sound intensity and the like. For example, if the intonation of the user speech is cheerful, it is determined that the user is happy.

For the scheme of simultaneously recognizing content of a user speech and a user mood, the execution body may convert the user speech into text and obtain the content of the user speech. Moreover, the execution body may not only extract the pronunciation characteristics of the user from the user speech and analyze the corresponding emotional characteristic information, but also extract the words with emotional information from the content of the user speech and analyze the corresponding emotional characteristic information.

Step 307 includes generating the animation interactive information for interaction with the user based on the content of the user speech and/or the user mood.

In this embodiment, the above-mention execution body may generate the animation interactive information for interaction with the user based on the content of the user speech and/or the user mood. Expressions that match the user mood may be determined based on the user mood. Interactive content that matches the content of the user speech may be generated based on the content of the user speech. Here, the animation interactive information for interaction with the user may be generated based on the expressions that match the user mood and/or the interactive content that matches the user mood.

For a scheme of generating animation interactive information only based on expressions that match a user mood, the animation interactive information may be information describing facial actions of a person making a series of expressions that match the user mood.

For a scheme of generating animation interactive information only based on interactive content that matches a user mood, the animation interactive information may be information describing mouth-type actions of a person saying a series of interactive content that matches the user mood.

For a scheme of generating animation interactive information based on expressions that match a user mood and interactive content that matches the user mood, the animation interactive information may not only include information describing facial actions of a person making a series of expressions that match the user mood, but also include information describing mouth-type actions of the person saying a series of interactive content that matches the user mood.

Step 308 includes sending the three-dimensional virtual image and the animation interactive information to the terminal device.

In this embodiment, the specific operation of the step 308 is described in detail in the step 204 in the embodiment shown in Fig. 2, which is not repeated herein.

It can be seen from Fig. 3 that the flow 300 of the method for the animation interaction in this embodiment highlights the steps of generating the animation interactive information compared with the corresponding embodiment in Fig. 2. Therefore, in the scheme described in this embodiment, in the case where the user does not input a speech, the animation interactive information for interaction between persons in the person image is generated and sent to the terminal device to drive the interaction between different persons in the person image, and the interactive content matches the scene in the person image. In the case where the user inputs a speech, the animation interactive information for interaction with the user is generated and sent to the terminal device to drive the person in the person image to interact with the user, and the interactive content matches the user speech. For different situations, different animation interactive information may be generated to enable the interaction to be more targeted.

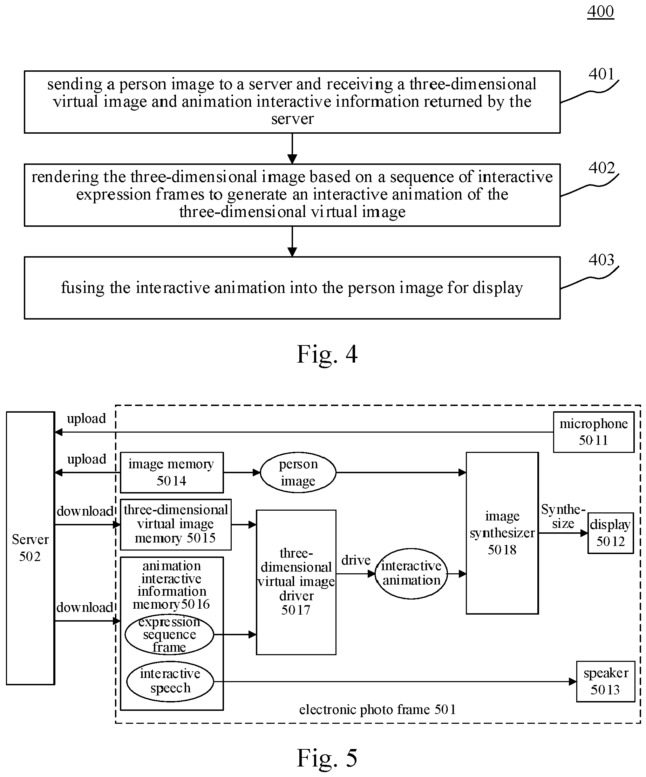

Further referring to Fig. 4, a flow 400 of another embodiment of a method for an animation interaction according to the present disclosure is shown. The method for the animation interaction includes the following steps 401 to 403.

Step 401 includes sending a person image to a server, and receiving a three-dimensional virtual image and animation interactive information returned by the server.

In this embodiment, the execution body of the method for the animation interaction (such as the terminal device 101 shown in Fig. 1) may send a person image to a server (such as the server 103 shown in Fig. 1), and receive a three-dimensional virtual image and animation interactive information returned by the server.

In practice, the terminal device may include, but is not limited to, an electronic photo frame, a smart phone, a tablet computer and the like. 3D face pinching software or intelligent photo frame software may be installed on the terminal device. A user may upload the person image to the server through the 3D face pinching software or the intelligent photo frame software, where the person image is generally a two-dimensional image of a person in the real world. In some embodiments, the 3D face pinching software or the intelligent photo frame software may pre-acquire the camera right of the terminal device to capture a person image through the camera of the terminal device. In some embodiments, the 3D face pinching software or the intelligent photo frame software may pre-acquire the photo album reading right of the terminal device to read the person image stored in the photo album of the terminal device.

The server may generate the three-dimensional virtual image and the animation interactive information based on the person image. The three-dimensional virtual image is similar to a person in the person image, and may be a three-dimensional animated person in which the person in the person image is stylized to highlight its personal characteristics. The animation interactive information may include a sequence of interactive expression frames. Optionally, the animation interactive information may further include an interactive speech.

In some embodiments, the animation interactive information may match the scene in the person image. Specifically, the server may first recognize a number of persons in the person image and environment information, and then generate the animation interactive information for interaction between the persons in the person image based on the number of the persons in the person image and the environment information. In the case where the user does not input a speech, the animation interactive information for interaction between the persons in the person image is generated and sent to the terminal device to drive the interaction between the different persons in the person image, and interactive content matches the scene in the person image.

In some embodiments, the animation interactive information may match a user speech. Specifically, the 3D face pinching software or the intelligent photo frame software may pre-acquire the recording right of the terminal device, and collect the user speech input by the user through the microphone of the terminal device. The server may first recognize content of the user speech and/or a user mood, and then generate the animation interactive information for interaction with the user based on the content of the user speech and the user mood. In the case where the user inputs a speech, the animation interactive information for interaction with the user is generated and sent to the terminal device to drive the person in the person image to interact with the user, and interactive content matches the user speech. For different situations, different animation interactive information may be generated to enable the interaction to be more targeted.

Step 402 includes rendering the three-dimensional virtual image based on the sequence of interactive expression frames to generate an interactive animation of the three-dimensional virtual image.

In this embodiment, the execution body may render the three-dimensional virtual image based on the sequence of interactive expression frames to generate an interactive animation of the three-dimensional virtual image. The three-dimensional virtual image in the interactive animation sequentially makes expressions in the sequence of interactive expression frames.

Step 403 includes fusing the interactive animation into the person image for display.

In this embodiment, the execution body may fuse the interactive animation into the person image for display, and add the three-dimensional virtual image in the virtual world to the person image in the real world for interaction, thereby realizing the augmented reality of the person image. Optionally, in the case where the animation interactive information further includes the interactive speech, while the interactive animation fused into the person image is displayed, the interactive speech may be synchronously played by the execution body, thereby realizing the virtual companion of a plurality of presentation forms.

According to the method for the animation interaction provided in the embodiments of the present disclosure, at first, the person image is sent to the server and the three-dimensional virtual image similar to the person in the person image and the animation interactive information returned by the server are received; then the three-dimensional virtual image is rendered based on the sequence of interactive expression frames to generate the interactive animation of the three-dimensional virtual image; and finally the interactive animation fused into the person image is displayed and the interactive speech is synchronously played. The person in the person image is replaced with a similar three-dimensional virtual image, and the animation interactive information is used to drive the three-dimensional virtual image to accompany users, thereby making the presentation forms of the virtual companion more diverse and improving the presentation effect quality and the overall interaction quality of the virtual companion. Further, the participation and sense of identity of the user are greatly improved, thereby increasing the competitiveness and influence of the product to which the method for the animation interaction is applied.

For ease of understanding, Fig. 5 shows a diagram of a scenario of a method for an animation interaction in which an embodiment of the present disclosure may be implemented. As shown in Fig. 5, an electronic photo frame 501 includes a microphone 5011, a display 5012, a speaker 5013, an image memory 5014, a three-dimensional virtual image memory 5015, an animation interactive information memory 5016, a three-dimensional virtual image driver 5017 and an image synthesizer 5018. After a user stores a person image in the image memory 5014, the upload of the person image to a server 502 is triggered. After the person image is uploaded to the server 502 for the first time, the server 502 may generate a three-dimensional virtual image corresponding to all persons in the person image by using the PTA technology, and download the three-dimensional virtual image to the three-dimensional virtual image memory 5015. Subsequently, the server 502 may generate animation interactive information (including a sequence of expression frames and an interactive speech) matching the scene in the person image according to the number of the persons in the person image and the environment information, and download the animation interactive information to the animation interactive information memory 5016 as default animation interactive information. During operations, if the microphone 5011 does not collect the user speech input by the user, the subsequent driving and synthesizing operations are directly completed according to the default animation interactive information. During operations, if the microphone 5011 collects the user speech input by the user, the microphone 5011 may upload the collected user speech to the server 502. The server 502 may generate temporary animation interactive information for interaction with the user based on the content of the user speech and the user mood, and download the temporary animation interactive information to the animation interactive information memory 5016. In this case, the subsequent driving and synthesizing operations are completed according to the temporary animation interactive information. Specifically, the three-dimensional virtual image is driven in the three-dimensional virtual image driver 5017 according to the animation interactive information to generate an interactive animation. The interactive animation is fused into the person image in the image synthesizer 5018 and displayed with the display 5012. Meanwhile, the interactive speech is synchronously played by the speaker 5013.

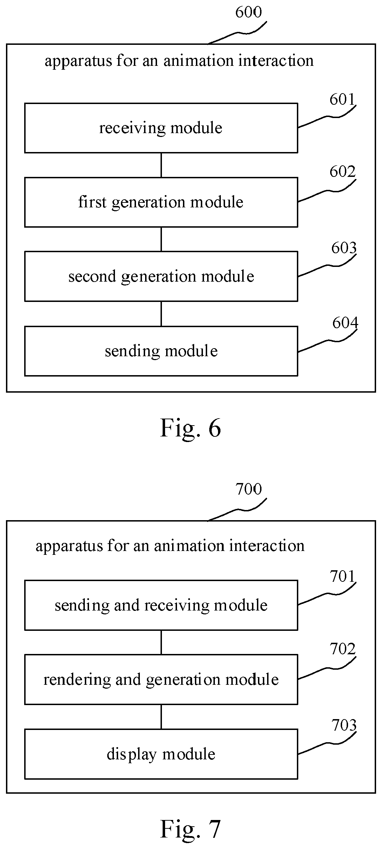

Further referring to Fig. 6, as implementations of the methods shown in the above figures, the present disclosure provides an embodiment of an apparatus for an animation interaction corresponding to the embodiment of the method shown in Fig. 2, which may be specifically applied to various electronic devices.

As shown in Fig.6, an apparatus for an animation interaction 600 of this embodiment may include a receiving module 601, a first generation module 602, a second generation module 603 and a sending module 604. The receiving module 601 is configured to receive a person image sent by a terminal device; the first generation module 602 is configured to generate a three-dimensional virtual image based on the person image, where the three-dimensional virtual image is similar to a person in the person image; the second generation module 603 is configured to generate animation interactive information, where the animation interactive information includes a sequence of interactive expression frames; and the sending module 604 is configured to send the three-dimensional virtual image and the animation interactive information to the terminal device.

In this embodiment, the specific processing of the receiving module 601, the first generation module 602, the second generation module 603 and the sending module 604 in the apparatus for the animation interaction 600 and the technical effects thereof may be referred to the relevant descriptions of the steps 201-204 in the corresponding embodiment in Fig. 2, which are not repeated herein.

In some optional implementations of this embodiment, the animation interactive information further includes an interactive speech.

In some optional implementations of this embodiment, the first generation module 602 is further configured to: classify facial organs of the person in the person image to obtain weights of the facial organs belonging to a plurality of types of pre-stored virtual facial organs; weight virtual facial organs corresponding to the plurality of the types of the pre-stored virtual facial organs based on the weights to generate virtual facial organs of the person in the person image; and generate the three-dimensional virtual image based on the virtual facial organs of the person in the person image.

In some optional implementations of this embodiment, the second generation module 603 is further configured to: recognize a number of persons in the person image and environment information; and generate animation interactive information for interaction between the persons in the person image based on the number of the persons in the person image and the environment information.

In some optional implementations of this embodiment, the second generation module 603 is further configured to: receive a user speech sent by the terminal device; recognize content of the user speech and/or a user mood; and generate animation interactive information for interaction with the user based on the content of the user speech and/or the user mood.

Further referring Fig.7, as implementations of the methods shown in the above figures, the present disclosure provides an embodiment of an apparatus for an animation interaction corresponding to the embodiment of the method shown in Fig. 4, which may be specifically applied to various electronic devices.

As shown in Fig. 7, an apparatus for an animation interaction 700 of this embodiment may include: a sending and receiving module 701, a rendering and generation module 702 and a display and playback module 703. The sending and receiving module 701 is configured to send a person image to a server, and receive a three-dimensional virtual image and animation interactive information returned by the server, where the three-dimensional virtual image is similar to a person in the person image, and animation interactive information includes a sequence of interactive expression frames; the rendering and generation module 702 is configured to render the three-dimensional virtual image based on the sequence of interactive expression frames to generate an interactive animation of the three-dimensional virtual image; and the display module 703 is configured to fuse the interactive animation into the person image for display.

In this embodiment, the specific processing of the sending and receiving module 701, the rendering and generation module 702 and the display module 703 in the apparatus for the animation interaction 700 and the technical effects thereof may be referred to the relevant descriptions of the steps 401-403 in the corresponding embodiment in Fig. 4, which are not repeated herein.

In some optional implementations of this embodiment, the animation interactive information further includes an interactive speech; and the apparatus for the animation interaction 700 further includes a playback module (not shown) configured to synchronously play the interactive speech.

In some optional implementations of this embodiment, the apparatus for the animation interaction 700 further includes: a collection and sending module (not shown) configured to collect a user speech input by a user and send the user speech to the server; and the sending and receiving module 701 is further configured to receive the animation interactive information for interaction with the user, the animation interactive information being returned by the server and generated based on the user speech.

According to an embodiment of the present disclosure, the present disclosure also provides an electronic device and a readable storage medium.

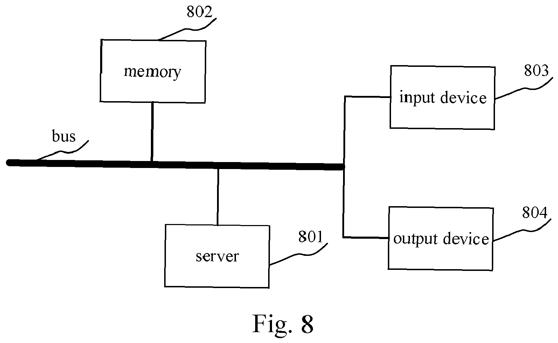

Fig. 8 is a block diagram of an electronic device of a method for an animation interaction of an embodiment of the present disclosure. Electronic devices are intended to represent various forms of digital computers, such as laptops, desktops, worktables, personal digital assistants, servers, blade servers, mainframe computers and other suitable computers. Electronic devices may also represent various forms of mobile devices, such as personal digital processing, cellular phones, smart phones, wearable devices and other similar computing devices. The parts, their connections and relationships, and their functions shown herein are examples only, and are not intended to limit the implementations of the present disclosure as described and/or claimed herein.

As shown in Fig. 8, the electronic device includes one or more processors 801, a memory 802, and interfaces for connecting components, including high-speed interfaces and low-speed interfaces. The components are interconnected by using different buses and may be mounted on a common motherboard or otherwise as desired. The processor may process instructions executed within the electronic device, including instructions stored in memory or on memory to display graphical information of the GUI on an external input/output device (such as a display device coupled to an interface). In other embodiments, a plurality of processors and/or a plurality of buses and a plurality of memories may be used with a plurality of memories, if desired. Similarly, a plurality of electronic devices may be connected, each of which provides some of the necessary operations (such as a server array, a set of blade servers, or a multiprocessor system). An example of a processor 801 is shown in Fig. 8.

The memory 802 is a non-transitory computer readable storage medium provided in the present disclosure. The memory stores instructions executed by at least one processor to cause the at least one processor to execute the method for the animation interaction provided in the present disclosure. The non-transitory computer readable storage medium of the present disclosure stores computer instructions for causing a computer to execute the method for the animation interaction provided in the present disclosure.

As a non-transitory computer readable storage medium, the memory 802 may be used to store non-transitory software programs, non-transitory computer executable programs and modules, such as the program instructions/modules corresponding to the method for the animation interaction of the embodiment of the present disclosure (such as the receiving module 601, the first generation module 602, the second generation module 603 and the sending module 604 shown in Fig. 6, or the sending and receiving module 701, the rendering and generation module 702 and the display module 703 shown in Fig.7). The processor 801 runs the non-transitory software programs, instructions and modules stored in the memory 802 to execute various functional applications and data processing of the server, thereby implementing the method for the animation interaction of the method embodiment.

The memory 802 may include a storage program area and a storage data area, where the storage program area may store an operating system and an application program required by at least one function; and the storage data area may store data created by the use of the electronic device according to the method for the animation interaction and the like. In addition, the memory 802 may include a high-speed random access memory, and may also include a non-transitory memory, such as at least one magnetic disk storage device, a flash memory or other non-transitory solid state storage devices. In some embodiments, the memory 802 may optionally include a memory disposed remotely relative to processor 801, which may be connected via a network to the electronic device of the method for the animation interaction. Examples of such networks include, but are not limited to, the Internet, enterprise intranets, local area networks, mobile communication networks and combinations thereof.

The electronic device of the method for the animation interaction may further include an input device 803 and an output device 804. The processor 801, the memory 802, the input device 803 and the output device 804 may be connected via a bus or other means, and an example of a connection via a bus is shown in Fig. 8.

The input device 803 may receive input number or character information, and generate key signal input related to user settings and functional control of the electronic device of the method for the animation interaction, such as a touch screen, a keypad, a mouse, a track pad, a touch pad, a pointer bar, one or more mouse buttons, a trackball, a joystick or the like. The output device 804 may include a display device, an auxiliary lighting device (such as an LED), a tactile feedback device (such as a vibration motor) and the like. The display device may include, but is not limited to, a liquid crystal display (LCD), a light emitting diode (LED) display and a plasma display. In some embodiments, the display device may be a touch screen.

The various embodiments of the systems and technologies described herein may be implemented in digital electronic circuit systems, integrated circuit systems, ASICs (application specific integrated circuits), computer hardware, firmware, software and/or combinations thereof. These various embodiments may include: being implemented in one or more computer programs, where the one or more computer programs may be executed and/or interpreted on a programmable system including at least one programmable processor, and the programmable processor may be a dedicated or general purpose programmable processor, which may receive data and instructions from a memory system, at least one input device and at least one output device, and send the data and instructions to the memory system, the at least one input device and the at least one output device.

These computing programs (also referred to as programs, software, software applications or code) include machine instructions of a programmable processor and may be implemented in high-level procedures and/or object-oriented programming languages, and/or assembly/machine languages. As used herein, the terms "machine readable medium" and "computer readable medium" refer to any computer program product, device and/or apparatus (such as magnetic disk, optical disk, memory, programmable logic device (PLD)) for providing machine instructions and/or data to a programmable processor, including a machine readable medium that receives machine instructions as machine readable signals. The term "machine readable signal" refers to any signal used to provide machine instructions and/or data to a programmable processor.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback, or tactile feedback); and input from the user may be received in any form, including acoustic input, speech input, or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementation of the systems and technologies described herein), or a computing system including any combination of such background component, middleware component, or front-end component. The components of the system may be interconnected by any form or medium of digital data communication (such as a communication network). Examples of communication networks include a local area network (LAN), a wide area network (WAN), and the Internet.

The computer system may include a client and a server. The client and the server are typically remote from each other and typically interact via a communication network. The relationship between the client and the server is generated by a computer program running on the corresponding computer and having a client-server relationship with each other.

According to the technical solutions of the present disclosure, at first, the person image sent by the terminal device is received; then the three-dimensional virtual image similar to the person in the person image is generated based on the person image, and the animation interactive information is generated; and finally the three-dimensional virtual image and the animation interactive information are sent to the terminal device. The person in the person image is replaced with a similar three-dimensional virtual image, and the animation interactive information is used to drive the three-dimensional virtual image to accompany users, thereby making the presentation forms of the virtual companion more diverse and improving the presentation effect quality and the overall interaction quality of the virtual companion. Further, the participation and the sense of identity of the user are greatly improved, thereby increasing the competitiveness and influence of the product to which the method for the animation interaction is applied.

It is to be understood that the steps of reordering, adding or deleting may be executed using the various forms shown above. For example, the steps described in the present disclosure may be executed in parallel or sequentially or in a different order, so long as the desired results of the technical solutions disclosed in the present disclosure may be realized, and no limitation is imposed herein.

The above specific description is not intended to limit the scope of the present disclosure. It will be appreciated by those skilled in the art that various modifications, combinations, sub-combinations, and substitutions may be made depending on design requirements and other factors. Any modifications, equivalents, and modifications that fall within the spirit and principles of this disclosure are intended to be included within the scope of this disclosure.

## Claims

1. A method for an animation interaction, comprising:
receiving (201) a person image sent by a terminal device;
generating (202) a three-dimensional virtual image based on the person image, wherein the three-dimensional virtual image is similar to a person in the person image;
generating (203) animation interactive information, wherein the animation interactive information comprises a sequence of interactive expression frames; and
sending (204) the three-dimensional virtual image and the animation interactive information to the terminal device.

2. The method according to claim 1, wherein the animation interactive information further comprises an interactive speech.

3. The method according to claim 1 or claim 2, wherein generating the three-dimensional virtual image based on the person image comprises:
classifying facial organs of the person in the person image to obtain weights of the facial organs belonging to a plurality of types of pre-stored virtual facial organs;
weighting virtual facial organs corresponding to the plurality of the types of the pre-stored virtual facial organs based on the weights to generate virtual facial organs of the person in the person image; and
generating the three-dimensional virtual image based on the virtual facial organs of the person in the person image.

4. The method according to any one of claims 1 to 3, wherein the generating animation interactive information comprises:
recognizing(303) a number of persons and environment information in the person image; and
generating(304) animation interactive information for interaction between the persons in the person image based on the number of the persons in the person image and the environment information.

5. The method according to any one of claims 1 to 3, wherein the generating animation interactive information comprises:
receiving(305) a user speech sent by the terminal device;
recognizing(306) content of the user speech and/or a user mood; and
generating(307) animation interactive information for interaction with the user based on the content of the user speech and/or the user mood.

6. A method for an animation interaction, comprising:
sending(401) a person image to a server, and receiving a three-dimensional virtual image and animation interactive information returned by the server, wherein the three-dimensional virtual image is similar to a person in the person image, and the animation interactive information comprises a sequence of interactive expression frames;
rendering(402) the three-dimensional virtual image based on the sequence of interactive expression frames to generate an interactive animation of the three-dimensional virtual image; and
fusing(403) the interactive animation into the person image for display.

7. The method according to claim 6, wherein the animation interactive information further comprises an interactive speech; and
the method further comprises: while the interactive animation fused into the person image is displayed,
synchronously playing the interactive speech.

8. The method according to claim 6 or claim 7, wherein the method further comprises:
collecting a user speech input by a user, and sending the user speech to the server; and
the receiving animation interactive information returned by the server, comprising:
receiving the animation interactive information for interaction with the user, the animation interactive information being returned by the server and generated based on the user speech.

9. An apparatus for an animation interaction, the apparatus comprising modules for performing the method according to any one of claims 1 to 5.

10. An apparatus for an animation interaction, the apparatus comprising modules for performing the method according to any one of claims 6 to 8.

11. An electronic device, comprising:
one or more processors; and
a storage device on which one or more programs are stored, wherein the programs, when executed by the one or more processors, cause the one or more processors to implement the method according to any one of claims 1 to 5 or the method according to any one of claims 6 to 8,.

12. A computer readable medium on which a computer program is stored, wherein the computer program, when executed by a processor, implements the method according to any one of claims 1 to 5 or the method according to any one of claims 6 to 8.

13. A computer program comprising instructions which, when the program is executed by a computer, cause the computer to perform the method according to any one of claims 1 to 5 or the method according to any one of claims 6 to 8.
